# EUROPEAN PATENT APPLICATION

(11) **EP 4 575 280 A1**
(43) Date of publication of application: **25.06.2025**
(21) Application number: 24222515.9
(22) Date of filing: 20.12.2024
(51) Int. Cl.: F16K 11/02, F16K 11/044, F16K 27/02, F16K 31/06

(54) **MODULAR VALVE ASSEMBLY**

(30) Priority: 22.12.2023 IN 202311088097
(71) Applicant: Goodrich Actuation Systems Limited, Wolverhampton, West Midlands WV10 7EH (GB)
(72) Inventor: PEREIRA, Elvis Jack, 560064 Bangalore, KA (IN)
(74) Representative: Dehns

(57) **Abstract**

A valve assembly includes a valve body including a plurality of valve openings (36, 38, 44), and a valve piston (26) positioned in the valve body and movable therein along a valve axis (32). The valve piston (26) is configured to selectably control a flow of fluid through the valve body via the plurality of valve openings (36, 38, 44). One or more plugs (54) are selectably installable to one or more valve openings (36, 38, 44) of the plurality of valve openings (36, 38, 44) to selectably change the valve configuration between a two-way valve and a three-way valve.

## Description

### CROSS REFERENCE TO RELATED APPLICATIONS

This application claims the benefit of Indian Provisional Application No. 202311088097 filed December 22, 2023.

### BACKGROUND

Exemplary embodiments pertain to the art of fluid flow control systems, and in particular to valves for such systems.

Valves are utilized in many fluid flow systems of aircraft, such as in flight controls or landing gear systems, or in other aerospace applications. Such valves may be, for example, 3 way/2 port valves or 2 way/2 port valves. The valves are subject to wear or damage and are often replaced during service or other maintenance operations. As such, many different valves are kept in stock at service facilities for use as replacements if needed. Many of these valve types have common internal components, and stocking of multiple valve configurations increases cost of operation of the systems.

### BRIEF DESCRIPTION

In one exemplary embodiment, a valve assembly includes a valve body including a plurality of valve openings, and a valve piston positioned in the valve body and movable therein along a valve axis. The valve piston is configured to selectably control a flow of fluid through the valve body via the plurality of valve openings. One or more plugs are selectably installable to one or more valve openings of the plurality of valve openings to selectably change the valve configuration between a two-way valve and a three-way valve.

Additionally or alternatively, in this or other embodiments a valve actuator is operable connected to the valve piston to drive movement of the valve piston along the valve axis.

Additionally or alternatively, in this or other embodiments the valve actuator is one of pneumatically, hydraulically or electrically operated. includes one or more solenoids.

Additionally or alternatively, in this or other embodiments the valve body includes a valve main body, and a floating body axially spaced apart from the valve main body. Each of the valve main body and the valve floating body include at least one valve opening of the plurality of valve openings.

Additionally or alternatively, in this or other embodiments a hub is positioned axially between the valve main body and the floating body.

Additionally or alternatively, in this or other embodiments an axial length of the hub determines a stroke length of the valve piston.

Additionally or alternatively, in this or other embodiments the hub is selectably replaceable to change a stroke length of the valve piston.

Additionally or alternatively, in this or other embodiments each valve opening of the plurality of valve openings have an identical configuration.

Additionally or alternatively, in this or other embodiments one or more fastener openings are located at each valve opening of the plurality of valve openings and are configured for connection of one or more fittings thereto.

Additionally or alternatively, in this or other embodiments the valve assembly is further configurable as a 90-degree valve.

In another exemplary embodiment, a fluid flow system includes one or more fluid flow pathways, and a valve assembly operably connected to the one or more fluid flow pathways. The valve assembly includes a valve body including a plurality of valve openings and a valve piston positioned in the valve body and movable therein along a valve axis. The valve piston is configured to selectably control a flow of fluid through the valve body via the plurality of valve openings. One or more plugs are selectably installable to one or more valve openings of the plurality of valve openings to change the valve configuration between a two-way valve and a three-way valve.

Additionally or alternatively, in this or other embodiments a valve actuator is operable connected to the valve piston to drive movement of the valve piston along the valve axis.

Additionally or alternatively, in this or other embodiments the valve actuator is one or more off hydraulically, pneumatically or electrically operated.

Additionally or alternatively, in this or other embodiments the valve body includes a valve main body, and a floating body axially spaced apart from the valve main body. Each of the valve main body and the valve floating body include at least one valve opening of the plurality of valve openings.

Additionally or alternatively, in this or other embodiments a hub is positioned axially between the valve main body and the floating body.

Additionally or alternatively, in this or other embodiments an axial length of the hub determines a stroke length of the valve piston.

Additionally or alternatively, in this or other embodiments each valve opening of the plurality of valve openings have an identical configuration.

In yet another exemplary embodiment, a method of assembling a valve assembly includes installing a valve piston into a valve body. The valve body includes a plurality of valve openings therein. A plug is installed in a first valve opening of the plurality of valve openings to block the flow of fluid through the valve opening and define a first valve configuration. The plug is removed from the first valve opening to change the configuration of the valve assembly to a second valve configuration.

Additionally or alternatively, in this or other embodiments the plug is installed in a second valve opening of the plurality of valve openings to change the configuration of the valve assembly to a third configuration.

Additionally or alternatively, in this or other embodiments the valve body includes a hub installed therein. The hub defines a stroke length of the valve piston. A first hub having a first axial length is exchanged for a second hub having a second hub length, thereby changing the stroke length from a first stroke length to a second stroke length which in turn changes the flow rate of the valve.

### BRIEF DESCRIPTION OF THE DRAWINGS

The following descriptions should not be considered limiting in any way. With reference to the accompanying drawings, like elements are numbered alike:
FIG. 1 is a schematic illustration of an exemplary embodiment of a fluid flow system including one or more valve assemblies;
FIG. 2 is a cross-sectional view of an exemplary embodiment of a valve assembly;
FIG. 3 is a perspective view of an exemplary embodiment of a valve assembly;
FIG. 4 is a cross-sectional view of an exemplary embodiment of a valve assembly configured as a 2 way / 2 port valve assembly;
FIG. 5 is a cross-sectional view of an exemplary embodiment of a valve assembly configured as a 90-degree valve assembly; and
FIG. 6 is a cross-sectional view of an exemplary embodiment of a valve assembly configured as a 3 way / 2 port valve assembly.

### DETAILED DESCRIPTION

A detailed description of one or more embodiments of the disclosed apparatus and method are presented herein by way of exemplification and not limitation with reference to the Figures.

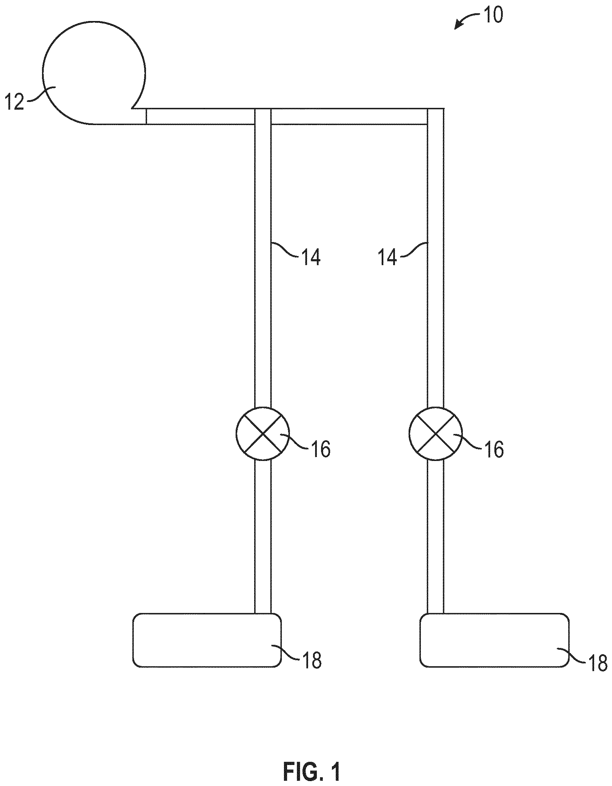

Referring to FIG. 1, illustrated is an exemplary embodiment of a fluid flow system 10, which may include a fluid pump 12, a plurality of fluid lines 14 extending downstream of the fluid pump 12, and one or more valve assemblies 16 operably connected to the fluid lines 14 which are activated to control a flow of fluid to, for example, one or more actuators 18. One skilled in the art will readily appreciate that the fluid flow system 10 is merely exemplary, and that other configurations of fluid flow systems are contemplated within the scope of the present disclosure. In some embodiments, the fluid is an oil or hydraulic fluid, while in other embodiments other fluids such as water or fuel may be utilized.

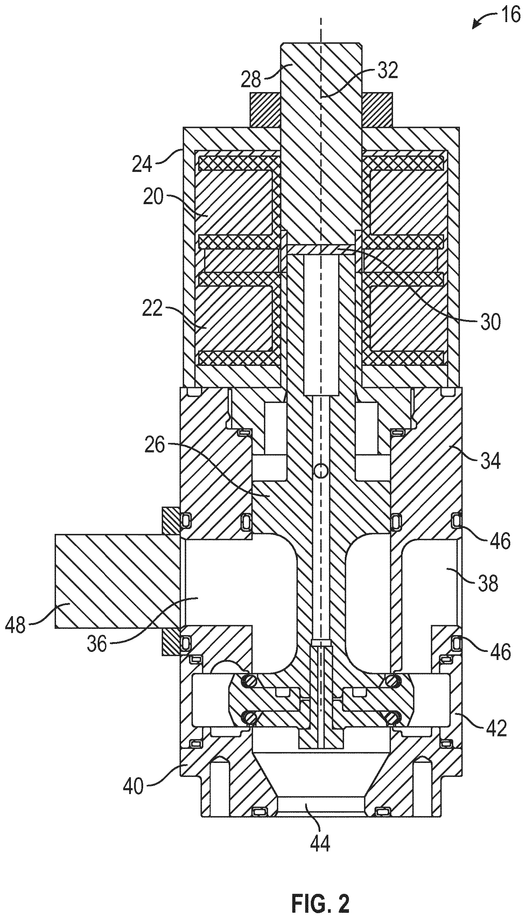

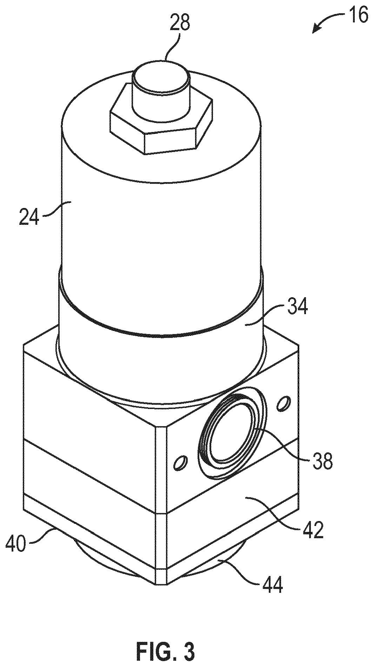

A cross-sectional view of an exemplary embodiment of a valve assembly 16 is illustrated in FIG. 2 and a perspective view is illustrated in FIG. 3. The valve assembly 16 is a solenoid valve including a first solenoid 20 and a second solenoid 22 disposed in a solenoid housing 24. The solenoids 20, 22 surround a valve piston 26 and a static core 28, with an air gap 30 defined between the valve piston and the static core 28. Selectively energizing of the solenoids 20, 22 changes a magnetic flux in the solenoid housing 24 which causes the valve piston 26 to move along a piston axis 32. While the embodiment of FIG. 2 is a solenoid valve, one skilled in the art will readily appreciate that the present disclosure may be readily applied to valves utilizing an armature as a valve actuation device. The valve piston 26 extends into a main body 34 of the valve assembly 16, with the position of the valve piston 26 along the valve axis 32 in the main body 34 controlling a flow of fluid into and out of the valve assembly 16.

The valve assembly 16 includes multiple valve openings for fluid flow into and out of the valve assembly 16. For example, in the embodiment of FIG. 2, the main body 34 includes a first valve opening 36 and a second valve opening 38 which, in some embodiments are located 180 degrees apart relative to the valve axis 32. Further, the valve assembly 16 includes a floating body 40 axially spaced apart from the main body 34 with a hub 42 disposed axially between the main body 34 and the floating body 40. A third valve opening 44 is disposed in the floating body 40 and is selectably fluidly connected to the first valve opening 36 and/or the second valve opening 38. Each of the valve openings 36, 38 and 44 include fastener openings 46 at which fittings 48 may be secured for attachment to the valve assembly 16. The connection type of the fittings 48 may vary, and may include a flanged end, a threaded end or a surface butt type of connection. This versatility is advantageous in that it allows for multiple types of fittings 48 to be connected to the valve assembly 16.

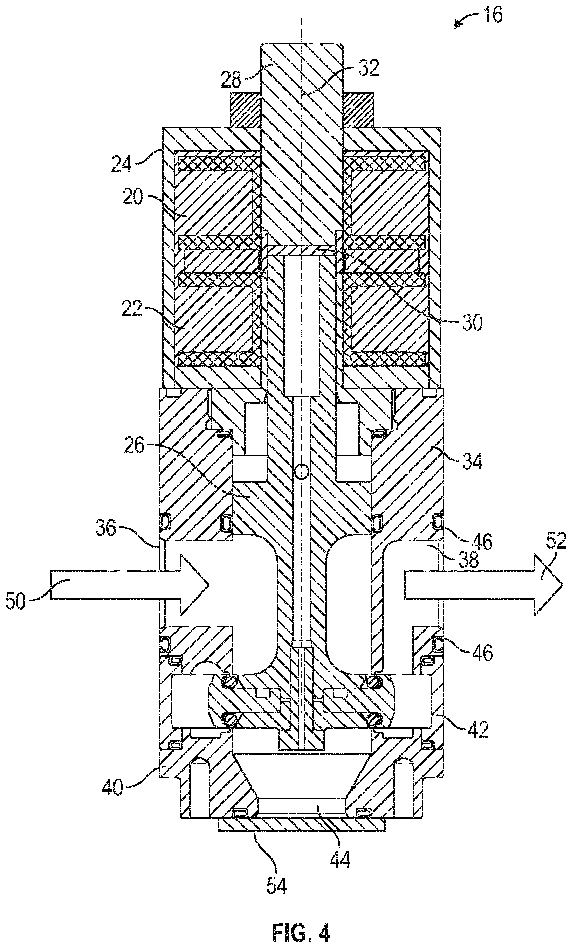

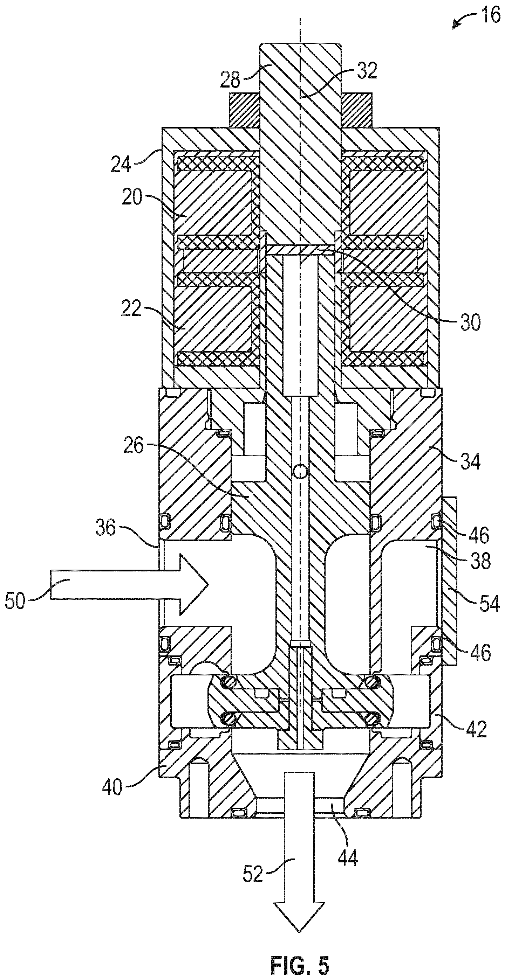

Referring now to FIG. 4, the valve assembly 16 is configured as a 2 way/ 2 port valve assembly 16, where the first valve opening 36 is a valve inlet 50 and the second valve opening 38 is a valve outlet 52. This is accomplished by installing a plug 54 or cover at the third valve opening 44 making the third valve opening 44 inoperable. As illustrated in FIG. 5, the valve assembly 16 may also be reconfigured as a 90-degree valve assembly 16 by moving the plug 54 from the third valve opening 44 to the second valve opening 38. Thus the third valve opening 44 is the valve outlet 52. Similarly, the configuration could be reversed to the third valve opening 44 is the valve inlet 50 and the first valve opening 36 is the valve outlet 52.

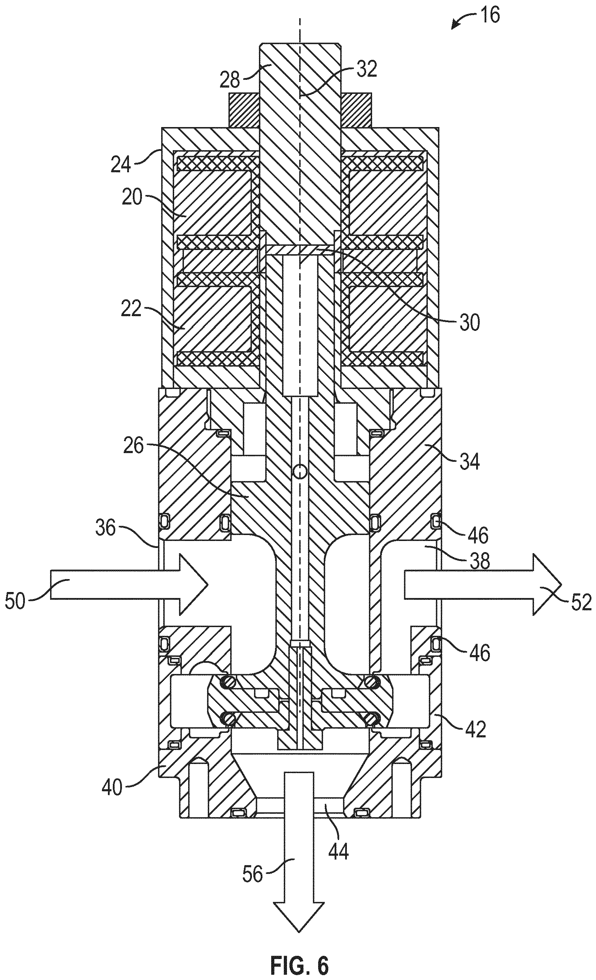

Referring now to FIG. 6, when the plug 54 is completely removed from the valve assembly 16, the valve assembly 16 is configured as a 3 way/ 2 port valve assembly 16. In this configuration, the first valve opening 36 may be the valve inlet 50 and the second valve opening 38 may be the valve outlet 38, while the third valve opening 44 may be configured as a drain 56 through which excess fluid flow is removed from the valve assembly 16. Additionally, in some embodiments, the hub 42 is interchangeable. Replacing the hub 42 with one having a longer or shorter axial length relative to the valve axis 32 correspondingly lengthens or shortens a stroke length of the valve piston 26.

The valve assemblies 16 disclosed herein allow for many different valve configurations, such as inlet and outlet positions, and stroke length from the same basic valve configuration by moving or changing select components, such as the position of the plug 54 and the configuration of the hub 42. This reduces the number of different valve assemblies 16 that must be kept in stock at, for example, a service or repair facility, which reduces overall costs associated with the valve assemblies 16. Further, since the basic structure of the valve assembly 16 is the same, verification and qualification efforts are reduced for each of the valve configurations.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A valve assembly, comprising:
a valve body including a plurality of valve openings (36, 38, 44);
a valve piston (26) disposed in the valve body and movable therein along a valve axis (32), the valve piston (26) configured to selectably control a flow of fluid through the valve body via the plurality of valve openings (36, 38, 44); and
one or more plugs selectably installable to one or more valve openings (36, 38, 44) of the plurality of valve openings (36, 38, 44) to selectably change the valve configuration between a two-way valve and a three-way valve.

2. The valve assembly of claim 1, further comprising a valve actuator operable connected to the valve piston (26) to drive movement of the valve piston (26) along the valve axis (32), and optionally wherein the valve actuator is one of pneumatically, hydraulically or electrically operated. includes one or more solenoids (20, 22).

3. The valve assembly of any preceding claim, wherein the valve body includes:
a valve main body; and
a floating body (40) axially spaced apart from the valve main body, each of the valve main body and the valve floating body (40) including at least one valve opening of the plurality of valve openings (36, 38, 44).

4. The valve assembly of claim 3, further comprising a hub disposed axially between the valve main body and the floating body (40).

5. The valve assembly of claim 4, wherein an axial length of the hub determines a stroke length of the valve piston (26), and/or wherein the hub is selectably replaceable to change a stroke length of the valve piston (26).

6. The valve assembly of any preceding claim, wherein each valve opening of the plurality of valve openings (36, 38, 44) have an identical configuration.

7. The valve assembly of any preceding claim, further comprising one or more fastener openings at each valve opening of the plurality of valve openings (36, 38, 44) configured for connection of one or more fittings thereto.

8. The valve assembly of any preceding claim, wherein the valve assembly is further configurable as a 90-degree valve.

9. A fluid flow system, comprising:
one or more fluid flow pathways; and
a valve assembly operably connected to the one or more fluid flow pathways, the valve assembly including:
a valve body including a plurality of valve openings (36, 38, 44);
a valve piston (26) disposed in the valve body and movable therein along a valve axis (32), the valve piston (26) configured to selectably control a flow of fluid through the valve body via the plurality of valve openings (36, 38, 44); and
one or more plugs selectably installable to one or more valve openings (36, 38, 44) of the plurality of valve openings (36, 38, 44) to change the valve configuration between a two-way valve and a three-way valve.

10. The fluid flow system of claim 9, further comprising a valve actuator operable connected to the valve piston (26) to drive movement of the valve piston (26) along the valve axis (32), and optionally wherein the valve actuator is one or more off hydraulically, pneumatically or electrically operated.

11. The fluid flow system of any of claims 9 to 10, wherein the valve body includes:
a valve main body; and
a floating body (40) axially spaced apart from the valve main body, each of the valve main body and the valve floating body (40) including at least one valve opening of the plurality of valve openings (36, 38, 44).

12. The fluid flow system of claim 11, further comprising a hub disposed axially between the valve main body and the floating body (40), and optionally wherein an axial length of the hub determines a stroke length of the valve piston (26).

13. The fluid flow system of any of claims 9 to 12, wherein each valve opening of the plurality of valve openings (36, 38, 44) have an identical configuration.

14. A method of assembling a valve assembly comprising:
installing a valve piston (26) into a valve body, the valve body including a plurality of valve openings (36, 38, 44) therein;
installing a plug in a first valve opening of the plurality of valve openings (36, 38, 44) to block the flow of fluid through the valve opening and define a first valve configuration; and
removing the plug from the first valve opening to change the configuration of the valve assembly to a second valve configuration.

15. The method of claim 14, further comprising installing the plug in a second valve opening of the plurality of valve openings (36, 38, 44) to change the configuration of the valve assembly to a third configuration, and/or wherein the valve body includes a hub installed therein, the hub defining a stroke length of the valve piston (26); and
further comprising exchanging a first hub having a first axial length for a second hub having a second hub length, thereby changing the stroke length from a first stroke length to a second stroke length which in turn impact the flow rate of the valve.
